# EUROPEAN PATENT SPECIFICATION

(11) **EP 4 259 696 B1**
(45) Date of publication and mention of the grant of the patent: **27.11.2024**
(21) Application number: 21807158.7
(22) Date of filing: 24.11.2021
(51) Int. Cl.: C08J 3/05, C08J 7/052, C08L 23/08

(54) **AQUEOUS POLYOLEFIN DISPERSION**
WÄSSRIGE POLYOLEFINDISPERSION
DISPERSION DE POLYOLÉFINE AQUEUSE

(30) Priority: 10.12.2020 EP 20212990
(43) Date of publication of application: 18.10.2023
(73) Proprietor: ACTEGA DS GmbH, 28219 Bremen (DE)
(72) Inventor: MAIER, Anna, 46483 Wesel (DE); OELJESCHLÄGER, Jane, 28213 Bremen (DE)
(74) Representative: Altana IP Department
(86) International application number: PCT/EP2021/082762
(87) International publication number: WO 2022/122379

(56) References cited:
- EP-A1- 1 941 993
- EP-A1- 3 578 601
- WO-A1-2019/180118

## Description

The present invention relates to an aqueous polyolefin dispersion, a process for its preparation and to a heat-sealable structure.

In general, polymer dispersions in a carrier liquid can be prepared by high shear mixing of the polymer in the carrier liquid at a temperature that is above the melting temperature of the polymer. Upon cooling the mixture, a dispersion is obtained of finely divided solid polymer particles in the carrier liquid. Such dispersions are suitable for a number of applications, such as coatings for flexible packaging, heat seal compositions, adhesion promotor, barrier coating, binder, and surface modification having a special haptic effect.

In WO2001/64774 a process is described for making aqueous polyolefin dispersions using an extrusion process. In this process, all ingredients for the dispersion, including water, are extruded at elevated temperature and pressure. At the exit of the extruder the dispersion is collected in a water-cooled pressurized vessel.

Disadvantage of these known processes is that there is a relatively high-pressure build-up inside the extruder and that is not evident how the dispersion is collected from the extruder. Further, in these documents it is not disclosed how homogeneous dispersions can be prepared from a combination of starting materials, in particular combinations of high molecular weight polar and non-polar polymers. In WO2019/180118 the successful preparation of such a dispersion is described which might be used as a heat-seal varnish.

However, there is still a need to further improve the heat-sealing properties. Thus, it is an object to the present invention to provide such an aqueous dispersion which shows good results in respect to heat-sealing properties.

The solution to this problem is an aqueous polyolefin dispersion comprising
a. from 50 to 100 wt.% of an aqueous dispersion A comprising the following ingredients:
   i. from 60.0 to 98.9 wt.% of A1, a copolymer of polyethylene and (meth)acrylic acid [E(M)AA] or a mixture of different copolymers of polyethylene and (meth)acrylic acid,
   ii. from 1.0 to 39.0 wt.% of A2, another polymer or a mixture of other polymers, not being a copolymer of polyethylene and (meth)acrylic acid, selected from the group consisting of copolymers of ethylene and vinyl acetate (EVA) and copolymers of ethylene and vinyl acetate (EVA) modified with maleic anhydride,
   iii. from 0.1 - 10.0 wt.% of a silicate component A3 (wt.% refers to the relevant SiO₂ content) and
   iv. from 0 - 20 wt.% of additive not being A1, A2 or A3,
b. from 0 to 50 wt.% of a compound B, where compound B is a material dispersable or soluble in water and different from any of the ingredients of dispersion A
   wherein
   - the wt.% of A and B is based on the solid content of the whole aqueous polyolefin dispersion,
   - the wt% of the ingredients of dispersion A is based on the solid content of dispersion A,
   the sum of the wt.% of ingredients i to iv) of dispersion A is 100%.

In yet a further embodiment the present invention relates to a process for the preparation of the aqueous polyolefin dispersion wherein
a. in a first step all polymer components of dispersion A are intimately mixed at a temperature in the range of 50°C to 200 °C after which a homogenous compound of all components is obtained and
b. in a next step the homogeneous compound is mixed with water, compound B (if contained), and a neutralizing agent at a temperature which is 2 to 20°C above the highest melting temperature of the organic polymer components mixed in the first step until an aqueous dispersion is obtained wherein all dispersed particles have a particle size below 150 µm.

Typically, after step b. the mixture is cooled down.

Furthermore, in an another embodiment the present invention relates to a heat-sealable structure comprising an aluminum foil and a heat-seal lacquer on the basis of the aqueous polyolefin dispersion according to the present invention.

The "premixing step" a. allows the preparation of an aqueous dispersion without the use of (additional) emulsifiers. It is advantageous to avoid these emulsifiers in the dispersion because of food safe reasons and properties in connection with heat sealability.

In a further embodiment, the first step in the process according to the present invention is performed in a twin-screw extruder.

In a further embodiment the process according to the present invention the mixing of the homogeneous compound with water, compound B and a neutralizing compound is performed under elevated pressure.

In yet another embodiment the process according to the present invention the process wherein the mixing of the homogeneous compound with water, compound B and a neutralizing compound is performed at a pressure which is higher than the vapour pressure of water at the mixing temperature.

### Aqueous polymer dispersion A

The aqueous polyolefin dispersion of the current invention comprises an aqueous polymer dispersion A having the following ingredients:
i. from 60.0 to 98.9 wt.% of A1, a copolymer of polyethylene and (meth)acrylic acid [E(M)AA] or a mixture of different copolymers of polyethylene and (meth)acrylic acid,
ii. from 1.0 to 39.0 wt.% of A2, another polymer or a mixture of other polymers, not being a copolymer of polyethylene and (meth)acrylic acid, selected from the group consisting of copolymers of ethylene and vinyl acetate (EVA) and copolymers of ethylene and vinyl acetate (EVA) modified with maleic anhydride,
iii. from 0.1 - 10.0 wt.% of a silicate component A3 (wt.% refers to the relevant SiO₂ content) and
iv. from 0 - 20 wt.% of additive not being A1, A2 or A3.
wherein the wt% of the ingredients of dispersion A is based on the solid content of dispersion A, and the sum of the wt.% of ingredients i to iv of dispersion A is 100%.

The silicate component includes silica particles and/or fibers and silicate particles and/or fibers. Per definition silica does not contain other elements than Si, O and H. The corresponding wt.% quantification of silica (of all possible used silica types) refers to the corresponding SiO₂ content and is therefore independent of the corresponding water content (because some silica species are able to polycondensate by generating water).

However, silicates additionally might contain other elements (like Al). The corresponding wt.% quantification of "non-silica" silicates refers to dried species (dried at 400 °C and normal pressure until no water loss can be measured).

In a preferred embodiment of the invention dispersion A comprises the following ingredients:
i) from 80.5 to 98.5 wt.% of A1, a copolymer of polyethylene and (meth)acrylic acid [E(M)AA] or a mixture of different copolymers of polyethylene and (meth)acrylic acid
ii) from 1.0 to 19.0 wt.% of A2, another polymer or a mixture of other polymers, not being a copolymer of polyethylene and (meth)acrylic acid, selected from the group consisting of copolymers of ethylene and vinyl acetate (EVA) and copolymers of ethylene and vinyl acetate (EVA) modified with maleic anhydride
iii) from 0.3 - 5.0 wt.% of a silicate component A3 and
iv) from 0 - 10 wt.% of additive not being A1, A2 or A3.

The copolymer of polyethylene and (meth)acrylic acid (A1) that is present in polymer dispersion A can be any copolymer of polyethylene and (meth)acrylic acid as long as such copolymer is melt processable, for example a copolymer having a Melt Flow Index (MFI) of between 2 to 2000 g/10 min, as measured at 190 °C at a load of 2,16 kg. According to a preferred embodiment at least60 wt.% of A1 has a content of (meth)acrylic acid based groups in the copolymer of 11-30 wt.%, wherein the wt.% is based on the total weight of the copolymer.

Examples of suitable commercially available copolymers of polyethylene and (meth)acrylic acid that can be used in the dispersion according to the present invention include Primacor^{™} 5980 (ex. SK-Chemicals), Nucrel^{™} 925, Nucrel^{™} 960 (ex. Dow) and Escor^{™} 5200 (ex. Exxonmobil).

The other polymer (A2) that is present in polymer dispersion A include copolymers of ethylene and vinyl acetate (EVA) and copolymers of ethylene and vinyl acetate (EVA) modified with maleic anhydride.

In a preferred embodiment at least 60 wt.% of A2 has a content of vinyl acetate groups in the copolymer of 10-60 wt.%, preferably 15-40 wt.%, wherein the wt.% is based on the total weight of the copolymer. Examples of suitable commercially available other polymers A2 that can be used in polymer dispersion A according to the present invention include Orevac^{®} T9305 (ex. SK-Chemicals), Escorene^{™} FL 00328 (ex. Exxonmobil), Evatane^{®} 40-55 (ex. SK-Chemicals).

According to one embodiment the aqueous dispersion of the present invention is a heat sealable varnish. The improvement in respect to heat sealability is generally combined with the enhancement of the corresponding sealing strength, especially if aluminium is used as substrate.

Thus, one embodiment of the present invention relates to the use of an aqueous polyolefin dispersion as described above or an aqueous polyolefin dispersion producible by a process as described above as a heat-sealing varnish for aluminium substrates. Such aluminium substrates might have variable thicknesses and might be provided by foils, cans or coils.

Furthermore the invention relates to a heat-sealable structure comprising an aluminium substrate and a heat-seal lacquer on the basis of an aqueous polyolefin dispersion as described above.

Not only the sealing of aluminium (substrate) with aluminium (substrate) provides good results but also the sealing of aluminium (substrate) with polymer (substrate), especially with polyethylene (substrate). For a good sealing strength the dispersion can be applied to only one substrate or to both substrates.

In one embodiment at least 60 wt.% of A3 is provided by a synthetically produced crystalline silicate. An example of such a synthetic silicate which is not a silica is a synthetic smectite "K_{0.3}(Mg,Li)₃[Si₄O₁₀]F₂·nH₂O" (Laponite^{®}). Said type has a surface area (BET) of about 300 m²/g and a SiO₂ content of about 55 wt.%. Different types of Laponite can be used, some of them can be functionalized with phosphate groups.

In addition to synthetically produced silicates also clays might be used.

According to a preferred embodiment at least 60 wt.% of A3 is provided by silica. A suitable silica type is the so called "aerosil"-type: a fumed silica (surface area (BET) of about 200 m²/g and a SiO₂ content of >99.8 %).

The additive that can be present in the aqueous dispersion according to the present invention includes dispersing agents, adhesion promotors, tackifiers, defoamers, pigments and any other material that is known for use in polymer dispersions or polymer compositions.

Examples of suitable additives that can be used in the aqueous dispersion according to the present invention include stearic acid, oleic acid and other long chain carboxylic acids, waxes, such as paraffin wax and polyolefin wax, and dioctyl sodium sulfosuccinate.

### Compound B

Compound B is optionally present in the aqueous dispersion according to the present invention. Compound B is a material that is dispersable or soluable in water or a mixture of materials that are dispersable or soluble in water and different from any of the ingredients of dispersion A. For example, compound B can be added to improve the ability to recycle materials comprising the aqueous dispersion according to the present invention or materials or articles that are formed by evaporating the solvent from this dispersion. Compound B can be an inorganic material or an organic material. For example, Compound B can be a polymer or a mixture of polymers, dispersable or soluble in water.

Examples of suitable materials that can be used as compound B in the aqueous dispersion according to the present invention include polyvinylpyrrolidone and polyethylene glycol (PEG). In one embodiment the aqueous polyolefin dispersion contains (as an ingredient of B) less than 5 wt.%, preferably less than 4 wt.% of PEG, based on the solid content of the whole aqueous dispersion (preferably combined with having a pH-value of 7.5 - 9.4). In the process for the preparation of the aqueous polyolefin dispersion according to the present invention the homogenized compound obtained in the first step is mixed with water, compound B, and a neutralizing agent at a temperature which is 2 to 20°C above the highest melting temperature of the components mixed in the first step until an aqueous dispersion is obtained wherein all dispersed particles have a particle size below 150 µm.

A temperature which is 2 to 20°C above the highest melting temperature of the components mixed in the first step means a temperatures which is 2 to 20°C above the highest melting temperature of any of the individual organic polymer components that are mixed to obtain the homogenized compound. For example, if the homogenized compound is obtained by 3 ingredients, A1, A2 and A4, each having their own melting temperature (T_{MA1}, T_{MA2}, T_{MA4}), where T_{MA2} > T_{MA1} > T_{MA4}, 2 to 20°C above the highest melting temperature means 2 to 20 °C above T_{MA2}.

The neutralizing agent that is used in the process for the preparation of the aqueous polyolefin dispersion according to the present invention can be any basic aqueous solution, for example an aqueous solution of NH₃. The pH value of the aqueous polyolefin dispersion according to the present invention should be 7.5 - 9.4.

The size of the particles that are present in the aqueous polyolefin dispersion according to the present invention should be < 150 µm. This particle size can be measured by using a Microtrac S3500 laser diffraction system, using the wet dispersion module. For each measurement, 1 ml of a dispersion was added to the 1 I dispersing unit of the wet dispersion module, where the dispersing module was filled with water with a pH in the range of 7 - 10.

The process according to the present invention allows for the use of ingredients that are approved as indirect food additives, i.e. substances that may come into contact with food as part of packaging or processing equipment, but are not intended to be added directly to food. The ingredients are sometimes referred to as food safe materials or material suited for direct food contact. In this connection, "food safe" means that these materials satisfy the criteria of the European Union Regulation "EU 10-2011 for plastics intended to come into contact with food". In one embodiment of the present invention, all ingredients that are present in the aqueous polymer dispersion are food safe materials or material suited for direct food contact.

In general, the aqueous polyolefin dispersion according to the present invention has the following properties:
- Solid content 10 - 60 wt.%
- Viscosity 10 - 10000 mPa*s
- Storage stability ≥ 6 months
- Average particle size from 1 to 50 µm

The process according to the present invention provides a kind of premixing of (dry) components which is performed in the first step: All solid components of dispersion A, especially component A1, A2 and A3 are intimately mixed at a temperature in the range of 50°C to 200 °C after which a homogenous compound of all components is obtained. Said premixing step seems to be the basis for the generation of hybrid particles containing A1, A2 and A3. In the next step the homogeneous compound provided in the premixing step is further mixed with water, preferably with compound B, and a neutralizing agent: The result is an aqueous polyolefin dispersion comprising dispersed hybrid particles containing A1, A2 and A3.

In order to provide experimental information regarding the composition of the dispersion as analytical methods especially Differential Scanning Calorimetry (DSC) and/ or IR spectroscopy might be used. According to the said DSC method the melting temperatures (melting ranges) were determined on the one hand for the used raw materials (polymers) and on the other hand for the produced compounds (solid content of the dispersion). The melting ranges of the produced compounds were generally much more broader than of the used raw materials.

### DEFINITIONS

Within the content of this description the following definitions are used
- (meth)acrylic means acrylic and/or methacrylic;
- A homogeneous polymer containing compound is a compound that shows no optical defects when cast into a film with a thickness in the range of 1 to 2 mm.

### Measurement Methods

The following measurement methods were used to characterize the individual components and the obtained products mentioned in this description:
*Melt Flow Index* (MFI) was determined in accordance with ISO 1133 in a Zwick/Roell extrusion plastometer. The MFI is measured at 190 °C at a load of 2,16 kg. For each measurement, 6 gr of material was heated for 5 minutes inside the measurement cylinder prior to the start of a measurement. The MFI is the average value for three portions.

The *melting temperature* of a component was determined using differential scanning calorimetry according to ISO 11357. For the measurement a Mettler Toledo DSCStar System was used. The measurements were carried out under nitrogen in a temperature range of -60 to 200 °C and a heating rate of 10 K/min.

The *solid content* of a dispersion was determined in a Moisture Analyzer HC103 from Mettler-Toledo GmbH. The measurements are done at 130 °C for 30 minutes, then the weight is constant.

The *viscosity* of a dispersion was measured using a Thermo Fisher Scientific HAAKE^{™} Rotation Rheometer RV1 at 20 °C using a double-cone DC60/2 Ti L configuration in combination with a MPC/DC60 geometry. The measurements were performed during 120 s at shear rates between 0 and 120 s⁻¹. The viscosity values at shear rate 114 s⁻¹ are evaluated.

The *particle size* was measured using a Microtrac S3500 laser diffraction system, using a wet dispersion module. For each measurement, 1 ml of a dispersion was added to the 1 I dispersing module, where the dispersing module was filled with water with a pH in the range of 7 - 10. The further settings are cell size 2 mm, ultra sound duration 60 s. The specific value is x50-value in µm.

The *pH value* was determined by a pH meter PCE-228 of PCE Instruments accorded to DIN ISO 8975 of the undiluted dispersion.

The *preparation of the samples* contains several steps: After coating the aluminum foil with a wire bar, the drying took place in the oven at 120 degrees for 120 seconds. Afterwards the substrate was sealed against each other and cut into 150 mm wide stripes. The sealing conditions were 600 Newton, 140 degrees and 1 second. The sealed and cutted samples must then be kept in an air-conditioned room for at least 24 hours to condition. Afterwards the sealing strength can be determined.

The *seal strength* is determined according to DIN 55529 ("Packaging - Determining the sealed-seam strength of sealings made of flexible packaging material") with the tensile test machine zwickiLine for Flexible Low-Force Testing up to 5 kN from Zwick Roell.

### EXAMPLES

Various aqueous dispersions were prepared using the following procedure:
- In a first step a compound was prepared by mixing and kneading the individual ingredients in a Leistritz ZSE 18 Maxx twin screw extruder at a temperature in the range of 80 - 150 °C (temperature was selected based on the ingredients), where different temperature zones were created inside the extruder. The pressure inside the extruder was 35 bar maximum.
- In a next step the extruded compound was fed into a Büchi 2I Pressure reactor, equipped with a dissolver mixer operating at speeds between 100 - 1000 rpm. The dispersion was prepared at elevated temperature in the range of 90 - 150 °C at sometimes elevated pressure (additional pressure in the range of 0 - 100 bar). After the formation of a homogenous dispersion, the dispersion was cooled. The cooling was done until the temperature of the dispersion was around 40 °C.

The ingredients (in parts by weight, based on solid content) and conditions for each example are given in Table 1 below.

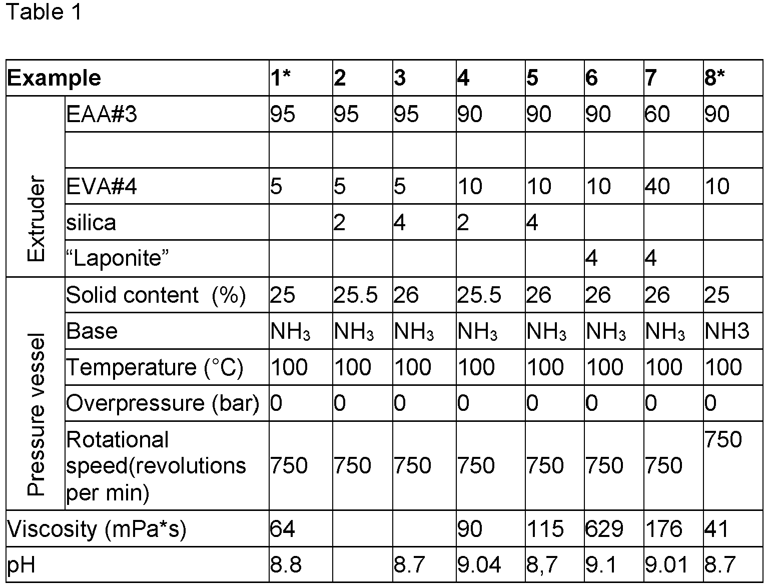

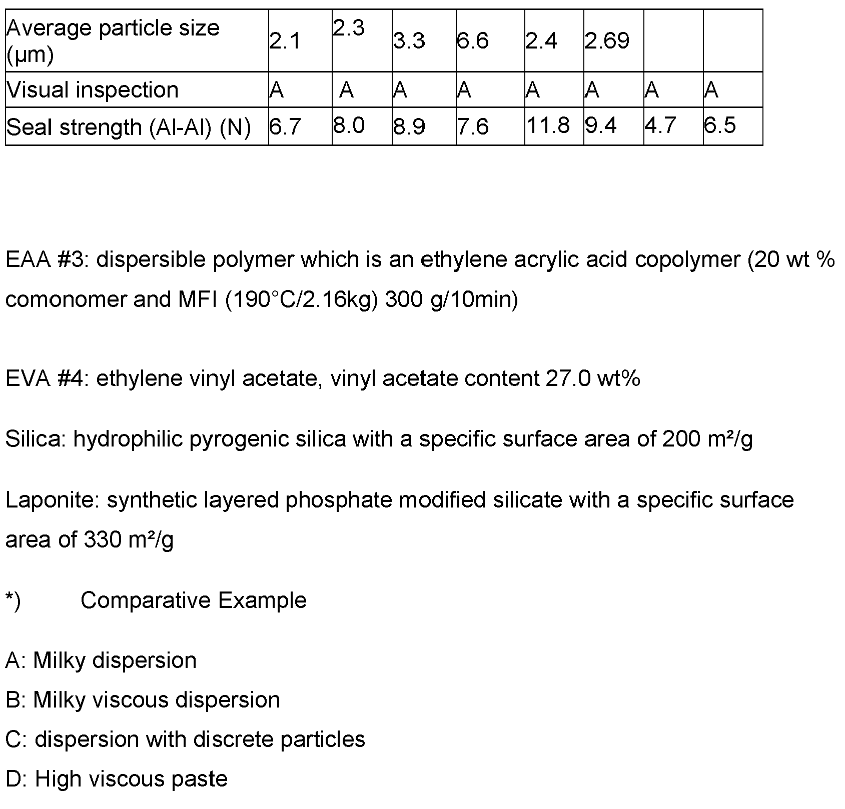

## Claims

1. Aqueous polyolefin dispersion comprising
a. from 50 to 100 wt.% of an aqueous dispersion A comprising the following ingredients:
i. from 60.0 to 98.9 wt.% of A1, a copolymer of ethylene and (meth)acrylic acid [E(M)AA] or a mixture of different copolymers of ethylene and (meth)acrylic acid,
ii. from 1.0 to 39.0 wt.% of A2, another polymer or a mixture of other polymers, not being a copolymer of ethylene and (meth)acrylic acid, selected from the group consisting of copolymers of ethylene and vinyl acetate (EVA) and copolymers of ethylene and vinyl acetate (EVA) modified with maleic anhydride,
iii. from 0.1 - 10.0 wt.% of a silicate component A3 (wt.% refers to the relevant SiO₂ content) and
iv. from 0 - 20 wt.% of additive not being A1, A2 or A3,
b. from 0 to 50 wt.% of a compound B, where compound B is a material dispersable or soluble in water and different from any of the ingredients of dispersion A,
wherein
- the wt.% of A and B is based on the solid content of the whole aqueous polyolefin dispersion,
- the wt% of the ingredients of dispersion A is based on the solid content of dispersion A,
- the sum of the wt.% of ingredients i) to iv) of dispersion A is 100%.

2. Aqueous polyolefin dispersion according to claim 1, wherein the dispersion A comprises the following ingredients:
i) from 80.5 to 98.5 wt.% of A1, a copolymer of ethylene and (meth)acrylic acid [E(M)AA] or a mixture of different copolymers of ethylene and (meth)acrylic acid,
ii) from 1.0 to 19.0 wt.% of A2, another polymer or a mixture of other polymers , not being a copolymer of ethylene and (meth)acrylic acid, selected from the group consisting of copolymers of ethylene and vinyl acetate (EVA) and copolymers of ethylene and vinyl acetate (EVA) modified with maleic anhydride
iii) from 0.3 - 5.0 wt.% of a silicate component A3 (wt.% refers to the relevant SiO₂ content) and
iv) from 0 - 10 wt.% of additive not being A1, A2 or A3.

3. Aqueous polyolefin dispersion according to claim 1 or 2, wherein at least 60 wt.% of A1 has a content of (meth)acrylic based groups in the copolymer of 11-30 wt.%, wherein the wt.% is based on the total weight of the copolymer.

4. Aqueous polyolefin dispersion according to one of the claims 1-3, wherein at least 60 wt.% of A2 has a content of vinyl acetate groups in the copolymer of 10-60 wt.%, wherein the wt.% is based on the total weight of the copolymer.

5. Aqueous polyolefin dispersion according to one of the claims 1-4, wherein at least 60 wt.% of A3 is provided by a synthetically produced crystalline silicate.

6. Aqueous polyolefin dispersion according to one of the claims 1-5, wherein at least 60 wt.% of A3 is provided by silica.

7. Aqueous polyolefin dispersion according to one of the claims 1-6, wherein at least 60 wt.% of A3 is provided by crystalline silica.

8. Aqueous polyolefin dispersion according to one of the claims 1 - 7 comprising dispersed hybrid particles containing A1, A2 and A3.

9. Aqueous polyolefin dispersion according to one of the claims 1 - 8 having a pH-value of 7.5 - 9.4.

10. Process for the preparation of the aqueous polyolefin dispersion of any of claims 1 to 9 wherein
a. in a first step all polymer components of dispersion A are intimately mixed at a temperature in the range of 50°C to 200 °C after which a homogenous compound of all components is obtained and
b. in a next step the homogeneous compound is mixed with water, with compound B if contained, and a neutralizing agent at a temperature which is 2 to 20°C above the highest melting temperature of the organic polymer components mixed in the first step until an aqueous dispersion is obtained wherein all dispersed particles have a particle size below 150 µm.

11. Use of an aqueous polyolefin dispersion according to one of the claims 1 - 9 or an aqueous polyolefin dispersion producible by a process according to claim 10 as a heat-seal lacquer for aluminium foils.

12. Heat-sealable structure comprising an aluminum substrate and a heat-seal lacquer on the basis of an aqueous polyolefin dispersion according to claims 1-9.

## Patentansprüche

1. Wässrige Polyolefindispersion, die Folgendes umfasst:
a. 50 bis 100 Gew.-% einer wässrigen Dispersion A, die die folgenden Bestandteile umfasst:
i. 60,0 bis 98,9 Gew.-% A1, ein Copolymer von Ethylen und (Meth)Acrylsäure [E(M)AA] oder ein Gemisch verschiedener Copolymere von Ethylen und (Meth)Acrylsäure,
ii. 1,0 bis 39,0 Gew.-% A2, ein anderes Polymer oder ein Gemisch anderer Polymere, wobei es sich nicht um ein Copolymer von Ethylen und (Meth)Acrylsäure handelt, das ausgewählt ist aus der Gruppe bestehend aus Copolymeren von Ethylen und Vinylacetat (EVA) und Copolymeren von Ethylen und Vinylacetat (EVA) modifiziert mit Maleinsäureanhydrid,
iii. 0,1 - 10,0 Gew.-% einer Silicatkomponente A3 (wobei sich Gew.-% auf den relevanten SiO₂-Gehalt bezieht) und
iv. 0 - 20 Gew.-% eines Additivs, bei dem es sich nicht um A1, A2 oder A3 handelt,
b. 0 bis 50 Gew.-% eines Compounds B, wobei Compound B ein Material ist, das in Wasser dispergierbar oder löslich und von jedem der Bestandteile von Dispersion A verschieden ist,
wobei
- die Gew.-% von A und B auf dem Feststoffgehalt der gesamten wässrigen Polyolefindispersion basieren,
- die Gew.-% der Bestandteile von Dispersion A auf dem Feststoffgehalt von Dispersion A basieren,
- die Summe der Gew.-% der Bestandteile i) bis iv) von Dispersion A 100 % beträgt.

2. Wässrige Polyolefindispersion nach Anspruch 1, wobei die Dispersion A die folgenden Inhaltsstoffe umfasst:
i) 80,5 bis 98,5 Gew.-% A1, ein Copolymer von Ethylen und (Meth)Acrylsäure [E(M)AA] oder ein Gemisch verschiedener Copolymere von Ethylen und (Meth)Acrylsäure,
ii) 1,0 bis 19,0 Gew.-% A2, ein anderes Polymer oder ein Gemisch anderer Polymere, wobei es sich nicht um ein Copolymer von Ethylen und (Meth)Acrylsäure handelt, das ausgewählt ist aus der Gruppe bestehend aus Copolymeren von Ethylen und Vinylacetat (EVA) und Copolymeren von Ethylen und Vinylacetat (EVA) modifiziert mit Maleinsäureanhydrid,
iii) 0,3 - 5,0 Gew.-% einer Silicatkomponente A3 (wobei sich Gew.-% auf den relevanten SiO₂-Gehalt bezieht) und
iv) 0 - 10 Gew.-% eines Additivs, bei dem es sich nicht um A1, A2 oder A3 handelt.

3. Wässrige Polyolefindispersion nach Anspruch 1 oder 2, wobei mindestens 60 Gew.-% A1 einen Gehalt an (Meth)Acrylsäure-basierten Gruppen im Copolymer von 11 - 30 Gew.-% aufweisen, wobei die Gew.-% auf dem Gesamtgewicht des Copolymers basieren.

4. Wässrige Polyolefindispersion nach einem der Ansprüche 1 - 3, wobei mindestens 60 Gew.-% A2 einen Gehalt an Vinylacetat-Gruppen im Copolymer von 10 - 60 Gew.-% aufweisen, wobei die Gew.-% auf dem Gesamtgewicht des Copolymers basieren.

5. Wässrige Polyolefindispersion nach einem der Ansprüche 1 - 4, wobei mindestens 60 Gew.-% A3 ein synthetisch hergestelltes kristallines Silicat sind.

6. Wässrige Polyolefindispersion nach einem der Ansprüche 1 - 5, wobei mindestens 60 Gew.-% A3 ein Siliciumdioxid sind.

7. Wässrige Polyolefindispersion nach einem der Ansprüche 1 - 6, wobei mindestens 60 Gew.-% A3 ein kristallines Siliciumdioxid sind.

8. Wässrige Polyolefindispersion nach einem der Ansprüche 1 - 7, die dispergierte Hybridpartikel umfasst, welche A1, A2 und A3 enthalten.

9. Wässrige Polyolefindispersion nach einem der Ansprüche 1 - 8 mit einem pH-Wert von 7,5 - 9,4.

10. Verfahren zur Herstellung der wässrigen Polyolefindispersion nach einem der Ansprüche 1 bis 9, wobei
a. in einem ersten Schritt alle Polymerkomponenten von Dispersion A bei einer Temperatur im Bereich von 50 °C bis 200 °C innig vermischt werden, wonach ein homogenes Compound aller Komponenten erhalten wird, und
b. in einem nächsten Schritt das homogene Compound mit Wasser, Compound B, sofern enthalten, und einem Neutralisierungsmittel bei einer Temperatur vermischt wird, die 2 bis 20 °C über dem höchsten Schmelzpunkt der im ersten Schritt vermischten organischen Polymerkomponenten liegt, bis eine wässrige Dispersion erhalten wird, wobei alle dispergierten Partikel eine Partikelgröße von weniger als 150 µm aufweisen.

11. Verwendung einer wässrigen Polyolefindispersion nach einem der Ansprüche 1 - 9 oder einer wässrigen Polyolefindispersion, die durch ein Verfahren nach Anspruch 10 herstellbar ist, als Heißsiegellack für Aluminiumfolien.

12. Heißsiegelbare Struktur, die ein Aluminiumsubstrat und einen Heißsiegellack auf der Grundlage einer wässrigen Polyolefindispersion nach einem der Ansprüche 1 - 9 umfasst.

## Revendications

1. Dispersion aqueuse de polyoléfine comprenant
a. de 50 à 100 % en poids d'une dispersion aqueuse A comprenant les ingrédients suivants :
i. de 60,0 à 98,9 % en poids de A1, un copolymère d'éthylène et d'acide (méth)acrylique [E(M)AA] ou un mélange de différents copolymères d'éthylène et d'acide (méth)acrylique,
ii. de 1,0 à 39,0 % en poids de A2, un autre polymère ou un mélange d'autres polymères, qui n'est pas un copolymère d'éthylène et d'acide (méth)acrylique, choisi dans le groupe constitué par des copolymères d'éthylène et d'acétate de vinyle (EVA) et des copolymères d'éthylène et d'acétate de vinyle (EVA) modifiés par l'anhydride maléique,
iii. de 0,1 à 10,0 % en poids d'un composant silicate A3 (% en poids faisant référence à la teneur en SiO₂ pertinent) et
iv. de 0 à 20 % en poids d'additif qui n'est pas A1, A2 ou A3,
b. de 0 à 50 % en poids d'un composé B, où le composé B est une matière dispersible ou soluble dans l'eau et différente de l'un quelconque des ingrédients de la dispersion A,
- le % en poids de A et B étant basé sur la teneur en solides de la dispersion aqueuse de polyoléfine entière,
- le % en poids des ingrédients de la dispersion A étant basé sur la teneur en solides de la dispersion A,
- la somme des % en poids des ingrédients i) à iv) de la dispersion A étant de 100 %.

2. Dispersion aqueuse de polyoléfine selon la revendication 1, la dispersion A comprenant les ingrédients suivants :
i. de 80,5 à 98,5 % en poids de A1, un copolymère d'éthylène et d'acide (méth)acrylique [E(M)AA] ou un mélange de différents copolymères d'éthylène et d'acide (méth)acrylique,
ii. de 1,0 à 19,0 % en poids de A2, un autre polymère ou un mélange d'autres polymères, qui n'est pas un copolymère d'éthylène et d'acide (méth)acrylique, choisi dans le groupe constitué par des copolymères d'éthylène et d'acétate de vinyle (EVA) et des copolymères d'éthylène et d'acétate de vinyle (EVA) modifiés par l'anhydride maléique
iii. de 0,3 à 5,0 % en poids d'un composant silicate A3 (% en poids faisant référence à la teneur en SiO₂ pertinent) et
iv. de 0 à 10 % en poids d'additif qui n'est pas A1, A2 ou A3.

3. Dispersion aqueuse de polyoléfine selon la revendication 1 ou 2, au moins 60 % en poids de A1 ayant une teneur en groupes à base (méth)acrylique dans le copolymère de 11 à 30 % en poids, le % en poids étant basé sur le poids total du copolymère.

4. Dispersion aqueuse de polyoléfine selon l'une des revendications 1 à 3, au moins 60 % en poids de A2 ayant une teneur en groupes acétate de vinyle dans le copolymère de 10 à 60 % en poids, le % en poids étant basé sur le poids total du copolymère.

5. Dispersion aqueuse de polyoléfine selon l'une des revendications 1 à 4, au moins 60 % en poids de A3 étant fourni par un silicate cristallin produit de manière synthétique.

6. Dispersion aqueuse de polyoléfine selon l'une des revendications 1 à 5, au moins 60 % en poids de A3 étant fourni par une silice.

7. Dispersion aqueuse de polyoléfine selon l'une des revendications 1 à 6, au moins 60 % en poids de A3 étant fourni par une silice cristalline.

8. Dispersion aqueuse de polyoléfine selon l'une des revendications 1 à 7 comprenant des particules hybrides dispersées contenant A1, A2 et A3.

9. Dispersion aqueuse de polyoléfine selon l'une des revendications 1 à 8 ayant une valeur de pH de 7,5 à 9,4.

10. Procédé pour la préparation de la dispersion aqueuse de polyoléfine selon l'une quelconque des revendications 1 à 9,
a. dans une première étape tous les composants polymères de la dispersion A étant mélangés intimement à une température dans la plage de 50 °C à 200 °C après quoi un composé homogène de tous les composants est obtenu et
b. dans une étape suivante le composé homogène étant mélangé avec de l'eau, avec le composé B s'il est contenu, et un agent de neutralisation à une température qui est 2 à 20 °C au-dessus de la température de fusion la plus haute des composants polymères organiques mélangés dans la première étape jusqu'à ce qu'une dispersion aqueuse soit obtenue, toutes les particules dispersées ayant une taille de particule inférieure à 150 µm.

11. Utilisation d'une dispersion aqueuse de polyoléfine selon l'une des revendications 1 à 9 ou d'une dispersion aqueuse de polyoléfine pouvant être produite par un procédé selon la revendication 10 en tant que laque thermoscellable pour des feuilles d'aluminium.

12. Structure thermoscellable comprenant un substrat d'aluminium et une laque thermoscellable à base d'une dispersion aqueuse de polyoléfine selon les revendications 1 à 9.
